# EUROPEAN PATENT APPLICATION

(11) **EP 1 655 467 A1**
(43) Date of publication of application: **10.05.2006**
(21) Application number: 04078029.8
(22) Date of filing: 03.11.2004
(51) Int. Cl.: F02C 3/20, F02C 3/00, F02C 3/30, F02C 3/34, F02C 6/18, F01K 23/10

(54) **Power generation system**

(71) Applicant: Nuon Tecno B.V., 6921 RL Duiven (NL)
(72) Inventor: Raas, Johannes Laurentius, 7006 JE Doetinchem (NL)
(74) Representative: Winckels, Johannes Hubertus F.

(57) **Abstract**

Power generation system, at least arranged for recovering energy from blast furnace gas, the system comprising at least one gas turbine (GT), at least one heat recovery steam generator (HRSG), and at least one steam turbine (ST), wherein said gas turbine (ST) is connected directly or indirectly to said heat recovery steam generator (HRSG) for supplying hot flue gas thereto, wherein said heat recovery steam generator (HRSG) is connected directly or indirectly to said steam turbine (ST) for supplying high pressure steam thereto, wherein the system comprises at least one syngas producer (SMR) for producing syngas, wherein the syngas producer (SMR) is coupled directly or indirectly at least to said gas turbine (GT) for supplying the turbine with at least part of said syngas, wherein a blast furnace gas supply (12) is provided for supplying blast furnace gas to said syngas producer (SMR) and/or to syngas produced thereby.

## Description

The invention relates to a power generation system, at least arranged for recovering energy from blast furnace gas, the system comprising at least one gas turbine, at least one heat recovery steam generator, and at least one steam turbine, wherein said gas turbine is connected directly or indirectly to said heat recovery steam generator for supplying hot flue gas thereto, wherein said heat recovery steam generator is connected directly or indirectly to said steam turbine for supplying high pressure steam thereto, wherein the system comprises a blast furnace gas supply for the supply of blast furnace gas.

Such a system is known from the art, for instance the STEG-unit of the Nuon IJmond-1 unit at the Corus-site, the Netherlands. In the known system, the excess blast furnace gas supply is connected to the gas turbine, to supply blast furnace gas (BFG) thereto. The blast furnace gas is enriched with natural gas (NG) and may also be enriched with coke oven gas (COG). The blast furnace gas has to be compressed to a certain combustion pressure, to be fired in the gas turbine.

During use, the gas turbine combusts the enriched, compressed blast furnace gas, thus liberating the heat of this steel mill gas. The gas turbine produced hot flue gas, which serves to drive the heat recovery system to produce steam. This steam is fed to the steam turbine, which is usually provided with an electricity generator for the production of electricity.

Both said blast furnace gas and coke oven gas are by-products of steel mill industry. Blast furnace gas is the gas that is produced by the blast furnace operation.

A typical composition of blast furnace gas may read for example (dry basis):
- H₂: : 4 vol%
- N₂: : 48 vol%

- Ar-O₂ :: 0,5 vol%
- CO: : 24 vol%
- CO₂: : 23,5 vol%

The lower heating value of this gas is approximately 3,5 MJ/Nm3 , a very low figure indeed. This low figure and the low content of Hz lead to poor combustibility of blast furnace gas, in particular in gas turbine combustion chambers.

An advantage of the known system is, that it can achieve a relatively high efficiency, which may be 50% or above. This high efficiency is attained using relatively clean blast furnace gas as one of the fuels, making good use of this steel mill by-product.

A disadvantage of the known system is, that the gas turbine has to be specifically adapted for the firing of a specific type of low calorific value fuel containing said blast furnace gas. Therefore, these gas turbine machines are dedicated machines, not well suited to accommodate specific electricity customer profiles. As a consequence, the known system lacks a desired power output flexibility. Besides, the known system is dependent of a steady supply of blast furnace gas for its functioning. In case the supply of blast furnace gas stops for some reason or the other, for example when the steel mill, producing that gas, is out of order, or closed due to unforeseeable future developments, the known power generation system also has to stop operating.

In an other known system, also called the 'Dunkerque concept', a conventional gas turbine is used for firing natural gas, resulting in the hot flue gas for feeding the heat recovery steam generator. In this second known system, blast furnace gas is fed to the heat recovery steam generator. This concept allows a maximum power station efficiency up to and above 50% using modern gas turbines. Although efficiency of this system is relatively high, the contribution of blast furnace gas of total power station thermal input is relatively low. The power station could actually be seen as a natural gas fired power station with blast furnace gas as the secondary fuel. In this second known system, any future permanent unavailability of blast furnace gas does not lead to major stranded costs, although the heat recovery steam generator is largely oversized. Due tot the oversized heat recovery steam generator and steam turbine, the power station operator will be left with a non-optimal efficiency natural gas fired power station (50-52%).

The present invention aims to provide an improved high efficiency power generation system, which is at least arranged for recovering energy from blast furnace gas. Particularly, the invention aims to provide a power generation system which is relatively flexible, and preferably adaptable to varying changes in the supply of blast furnace gas.

To this aim, according to the invention, the system comprises at least one syngas producer for producing syngas, wherein the syngas producer is coupled directly or indirectly at least to said gas turbine for supplying the turbine with at least part of said syngas, wherein a blast furnace gas supply is provided for supplying blast furnace gas to said syngas producer and/or to syngas produced thereby.

Therefore, at least part of the blast furnace gas can be used as a fuel in the production of syngas, for instance when syngas is produced in an endothermic process, such as steam reforming.

Also, at least part of the syngas can be burned, for example, in one or more conventional gas turbines. Besides, advantageously, the syngas is used to enrich further blast furnace gas, to be fired in said gas turbine. Syngas enriched blast furnace gas is better combustable compared to blast furnace gas that has been enriched with natural gas. Therefore, the system does not have to rely on the application of dedicated blast furnace gas turbines. In case the supply of blast furnace gas halts, the system can easily be switched for firing other types of fuel, such as natural gas, while still attaining a desired efficiency. Also, the system according to the invention can be used in firing natural gas together with syngas, or with syngas enriched blast furnace gas, depending on the availability of the fuels and a desired system operating efficiency.

During use, said syngas producer can be fed, for instance, with natural gas and water, besides the use of said blast furnace gas as a fuel, for the production of the syngas. Alternatives of said natural gas are, for instance, light refinery hydrocarbons, LPG, naphtha, and/or other suitable compounds.

According to an advantageous embodiment of the invention, the syngas producer is a steam reformer. In that case, preferably, the blast furnace gas is at least partially being supplied to the steam reformer, leading to a thermally highly efficient production of syngas.

After a certain period of operation, said steam reformer may advantageously be replaced by at least one coal biomass, oil, combustible waste gasifier and/or other suitable gasifier.

For example, the system can be used, wherein the steam reformer produces a first syngas, wherein at least one coal, oil, combustible waste and/or biomass gasifier is used for providing a second syngas, which second syngas is used instead of, or at least partially replaces, said syngas produced by said steam reformer. This is advantageous, for example when no natural gas is available anymore for use in the steam reformer. The syngas produced in said coal, oil, combustible waste and/or biomass gasifier can also enrich blast furnace gas, to be fired in said gas turbine.

Also, the system according to the invention can be used, by supplying blast furnace gas to the steam reformer during a first period of operation, for being combusted therein and/or to provide heat thereto, wherein during a second period of operation, the system is being run without the use of blast furnace gas, for instance by installing at least one coal and/or biomass gasifier for producing syngas which can be fired in said gas turbine.

Advantageously, said gas turbine comprises a dual burner gas turbine. Such a gas turbine is known from the art, for instance the MNQC dual fual burner of the GE PG9351FA type gas turbine of General Electric.

In an aspect of the invention, said steam reformer is connected directly or indirectly to said steam turbine for supplying high pressure steam thereto. Therefore, steam produced by the steam reformer can also be used in driving the steam turbine, thus improving overall system efficiency.

In an embodiment of the invention, the system comprises a gas mixer down-stream relative to said syngas producer and said blast furnace gas supply for providing a gas mixture comprising at least said syngas and blast furnace gas, wherein said gas turbine is down-stream relative to said gas mixer for receiving said gas mixture therefrom.

In this way, the syngas, produced by said steam reformer, can be used in enriching blast furnace gas. The resulting mixture can be burned in said gas turbine for the extraction of heat therefrom.

In an embodiment of the invention, the blast furnace gas supply is also connected directly or indirectly to said gas turbine and/or to said heat recovery steam generator for supplying blast furnace gas thereto. Thus, blast furnace gas can be supplied to various parts of the system, to be used in the generation of power. The amount of blast furnace gas, which is being fed to the syngas producer, gas turbine and/or heat reformer is preferably controllable, for providing optimum system efficiency at a certain level of blast furnace gas supply.

The invention further relates to a method for producing power, wherein at least one gas turbine produces hot flue gas which is being supplied to at least one heat recovery steam generator, wherein said heat recovery steam generator produces high pressure steam which is being supplied to at least one steam turbine.

Such methods are known from the art, but encounter various problems as follows from the above.

According to the present invention, the method is characterised by the features of claim 9. The method may use, for instance, a system according to any of the claims 1-8. According to the invention, syngas is being produced by at least one syngas producer, for example a steam reformer, wherein said syngas is being fed directly or indirectly to said gas turbine, wherein blast furnace gas is being supplied to said syngas producer and/or to syngas produced by said syngas producer.

The syngas can be burned in one or more relatively conventional, for instance multi-fuel, gas generators. Besides, the syngas can be used to highly enrich blast furnace gas, to be burned in said one or more burners. Herein, a 'conventional' gas generator can be understood as being a gas generator that can stably and efficiently burn 100% natural gas as well, this contrary to a dedicated gas generator that can only fire a mixture of gases containing blast furnace gas for which heating value and Wobbe Index can vary only in a narrow bandwidth, usually within 5-10% of design value.

In an aspect of the invention, about 20-30 mass% of a blast furnace gas stream is being fed to said syngas producer, wherein about 50-70 mass% of the blast furnace gas is being fed to said gas turbine, wherein a remaining percentage of said blast furnace gas stream is being fed to said heat recovery steam generator. With such ratio of blast furnace gas streams, good results and high efficiencies can be obtained. Very good results have been found when about 25 mass% of a blast furnace gas stream is being fed to said syngas producer, wherein about 60 mass% of the blast furnace gas is being fed to said gas turbine, wherein about 15 mass% of said blast furnace gas stream is being fed to said heat recovery steam generator.

In an embodiment of the invention, said heat recovery steam generator and/or said steam turbine generate water which is simply at least partially being fed to said syngas producer, to be used in producing said syngas.

Besides, in an advantageous and simple embodiment of the invention, when the syngas producer is a steam reformer, said steam reformer produces steam which is at least partially being supplied to said steam turbine, for driving the steam turbine, thus improving overall efficiency.

The invention further provides a method for improving the combustability of steel mill gases, comprising mixing syngas to blast furnace gas, wherein the syngas is preferably being produced by a steam reformer which is also being provided with blast furnace gas. Alternatively, the syngas can be produced by a coal,oil and/or biomass gasifier. and/or combustible waste gasifier

It has been found, that syngas enriched blast furnace gas can be fired stably in a gas turbine, providing a high efficiency. The syngas can be produced in various ways, for example by a gasification process, coal, oil, combustible waste material and/ or biomass gasification, preferably by a steam reformer, and/or the like. Besides, although presently less advantageous in view of overall efficiency and investment costs, the syngas can be produced, for instance, by partial oxidation (POX) and/or autothermal reforming (ATR) processes.

Also, the invention provides the use of blast furnace gas in firing a steam reformer for producing syngas.

Usually, water and natural gas will also be supplied to the steam reformer for the production of the syngas. By supplying the blast furnace gas to the steam reformer as well, the blast furnace gas can provide heat for the synthesis gas production in the furnace of the steam reformer. A large amount of heat -approximately half the heat- released in the steam reformer by combustion of blast furnace gas is added to the syngas heating value, due to the endothermic character of the steam reforming reactions.Further embodiments of the present invention are described in the accompanying claims.

An embodiment of the invention will now be described, by way of example only, with reference to the accompanying schematic drawings in which corresponding reference symbols indicate corresponding parts. Therein shows:
figure 1 a first prior art power system (IJmond1);
figure 2 is a second prior art power system (Dunkerque);
figure 3 an embodiment of a system according to the present invention; and
figures 4A and 4B table 2 showing results of numerical examples.

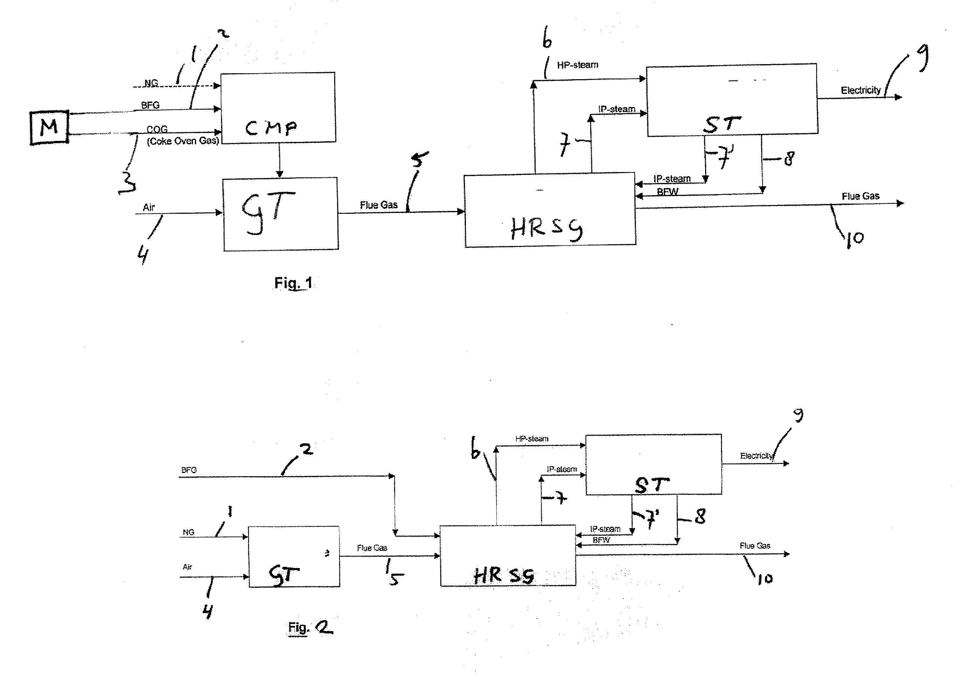

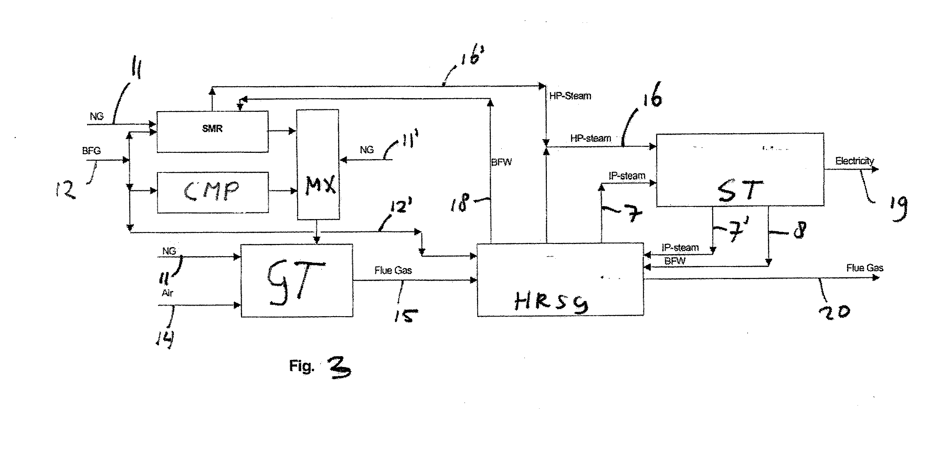

Figure 1 schematically shows a first known system for the generation of power, for instance the Combined Cycle unit of the Nuon IJmond-1 unit at the Corus-site, Netherlands. This prior art system comprises:
a commonly known gas turbine GT, a commonly known heat recovery steam generator HRSG, and a commonly known steam turbine ST.

The gas turbine GT is arranged to fire fuel for the production of power and hot flue gas. The heat recovery steam generator HRSG is arranged to recover heat contained in the exhaust gas stream of the gas turbine GT to produce high pressure steam. The steam generator ST is arranged to produce electricity from said steam.

The gas turbine ST is connected directly or indirectly to said heat recovery steam generator HRSG by a suitable flue gas supply connection 5 for supplying the hot flue gas to the steam generator HRSG. The heat recovery steam generator HRSG comprises a flue gas output 10. Said heat recovery steam generator HRSG is connected directly or indirectly to said steam turbine ST, by a steam supply connection 6, for supplying the high pressure steam thereto. Besides, the steam turbine ST comprises an electricity output 9. Connections 7, 7' may beprovided between the heat recovery steam generator HRSG and the steam turbine ST for circulation of intermediate-pressure steam (IP). Also, a water return line 8 is provided between the steam turbine ST and the heat recovery steam generator HRSG. Said connections between the various components of the system can be provided in various ways, as will be clear to the skilled person. The connections may comprise, for example, pipes linking components directly, or comprise further components, for example filter means, valve means, flow regulators and/or other devices which may lead to certain 'indirect' connections.

The gas turbine GT of the system of fig. 1 is specifically adapted for firing a compressed mixture of blast furnace gas (BFG) and natural gas (NG), and optionally coke oven gas. This specific type of fuel mixture is provided, using a compressor CMP which is being fed by a natural gas supply line 1, a blast furnace gas supply 2 and optionally be a coke oven gas supply 3. The gas turbine GT also comprises an air supply line 4 for the supply of air.

During use of the system of fig. 1, a steel mill M produces blast furnace gas and coke oven gas. These gases are fed to the compressor CMP (via lines 2 and 3), together with natural gas (via line 1), to be mixed and compressed. The resulting mixture is fired in the gas turbine GT, using said air. As a result, the gas turbine produces hot flue gas, which is fed to the heat recovery steam generator HRSG via flue gas line 5. This generator HRSG produces high pressure steam for driving the down-stream steam generator SG, which leads to the production of electricity by the steam generator ST. This known system can only run on one specific type of fuel, that is the compressed mixture of natural gas, blast furnace gas and coke oven gas, making the system not flexible to changes in the supply of blast furnace gas.

Fig. 2 schematically shows a second known system, also called the 'Dunkerque concept'. This second system differs from the system of fig. 1, in that it comprises a conventional gas turbine GT for firing natural gas. Blast furnace gas is being fed to the heat recovery steam generator HRSG during use (via supply line 2). As has been explained above, efficiency of such a system may be relatively high, but the contribution of blast furnace gas of total power station thermal input is relatively low.

Figure 3 shows a system according to the present invention for the generation of power. The system according to the invention differs from the known systems of figures 1 and 2, in that it comprises a steam reformer SMR for producing syngas. The precise arrangement and functioning of such a steam reformer SMR is known to the skilled person. The steam reformer SMR is coupled to the gas turbine GT for supplying the turbine with at least part of said syngas. Besides, the blast furnace gas supply 12 is at least connected to said steam reformer SMR for supplying blast furnace gas thereto. The system also comprises natural gas supply lines 11 for supplying natural gas to the steam reformer SMR and to the gas turbine GT. The gas turbine GT is of a dual burner type, for instance the MNQC dual fual burner of the GE PG 9351FA gas turbine of General Electric.

Advantageously, in the embodiment of the invention shown in figure 3, the steam reformer SMR is connected to said heat recovery steam generator HRSG by a water supply line 18 for receiving water therefrom.

Besides, in the embodiment of figure 3, the steam reformer SMR is connected to said steam turbine ST, via supply lines 16', 16, for supplying high pressure steam to the steam turbine ST.

The system of fig. 3 further comprises a gas mixer MX down-stream relative to said steam reformer SMR and said blast furnace gas supply 12 for providing a gas mixture comprising at least said syngas and blast furnace gas. The gas turbine GT is arranged down-stream relative to said gas mixer MX for receiving said gas mixture therefrom. An optional natural gas supply 11' is also coupled to the gas mixer MX, for the case that it is desired to feed natural gas to the content of the mixer MX for modifying the combustibility properties of the resulting gas mixture (to be fed to the gas turbine GT). The system of fig. 3 comprises a compressor CMP, arranged between said blast furnace gas supply 12 and said mixer MX, for compressing the blast furnace gas which is to be fed to the mixer MX.

Preferably, the blast furnace gas supply 12 is also connected to said gas turbine GT, and to said heat recovery steam generator HRSG for supplying blast furnace gas thereto. In the present embodiment, the blast furnace gas supply is connected to the gas turbine via the compressor CMP and gas mixer MX. Thus, the gas mixer MX can enrich the compressed blast furnace with said syngas, resulting in a fuel mixture which is stably combustable by the gas turbine.

Preferably, the gas turbine is a dual burner type gas turbine. In that case, for instance, the gas turbine can burn natural gas, which is supplied by the respective natural gas supply line 11, together with the gases that it receives from the gas mixer MX. The dual burner type turbine provides for a further system flexibility to the use and choice of fuels.

During use of the system shown in figure 3, power can be produced in a variety of ways, with high efficiencies. As in the systems of figure 1 and 2, during use of the system of fig. 3, the gas turbine ST produces hot flue gas which is being supplied to at least one heat recovery steam generator HRSG. The heat recovery steam generator HRSG produces high pressure steam which is being supplied to at least one steam turbine ST. In the present embodiment, syngas is being produced by the steam reformer SMR. Also, during use, blast furnace gas is being supplied to said steam reformer SMR, together with water and natural gas, for the production of said syngas.

The syngas, produced by the steam reformer SMR, is fed to said gas turbine via the mixer MX, to be fired in the gas turbine GT. The gas turbine GT may or may not burn natural gas at the same time as the firing of said gas mixture, which depends for example on amounts of natural gas and blast furnace gas available to the system.

Besides, preferably, a further amount of blast furnace gas is compressed by the compressor CMP and mixed with said syngas in the mixer MX. The resulting mixture is then being fed to the gas turbine GT, for the production of power and the flue gas to drive the heat recovery steam generator HRSG.

Also, preferably, an other stream of blast furnace gas is being supplied to said heat recovery steam generator HRSG, via a supply line 12'.

Water, that is generated by said heat recovery steam generator HRSG and/or said steam turbine ST, can at least partially be fed to said steam reformer SMR, to be used in producing said syngas.

In this way, a first part of the blast furnace gas is used very advantageously to provide heat for synthesis gas production from natural gas in the steam reformer furnace SMR. This first part of the BFG does not require any compression. Substantial savings in blast furnace gas compression costs (both investment and operational costs) can be achieved in this way, compared to the system shown in figure 1. Remaining parts of the BFG, if any, can be supplied to the compressor CMP and mixer MX, and to the heat recovery steam generator HRSG.

In the present embodiment of fig. 3, approximately half of the heat released in the steam reformer furnace SMR by combustion blast furnace gas is added to synthesis gas heating value thanks to the highly endothermic character of the steam reforming reactions. This chemical work picked up by the steam reforming natural gas stream will be converted into the electricity with the same efficiency as the one of natural gas fired in a combined cycle. The remaining heat liberated in the steam reformer furnace SMR is mostly transferred in the furnace to generate exergetically high quality, superheated steam, which can also be fed to the steam turbine ST via the steam supply lines 16', 16, resulting in further efficiency improvement.

Preferably, about 20-30 mass% of the total amount of a supply stream of blast furnace gas is being fed to said steam reformer SMR, wherein about 50-70 mass% of the blast furnace gas is being fed to said gas turbine GT, via said compressor CMP and mixer MX, wherein a remaining percentage of said blast furnace gas stream is being fed to said heat recovery steam generator HRSG. In a further, advantageous embodiment, about 25 mass% of the blast furnace gas stream is being fed to said steam reformer SMR, about 60 mass% of the blast furnace gas is being fed to said gas turbine GT, and about 15 mass% of said blast furnace gas stream is being fed to said heat recovery steam generator HRSG. However, different ratios between the various blast furnace gas streams may be applied, depending for instance on the total amount of the blast furnace gas that is being supplied to the system.

There is also the possibility to use all the available blast furnace gas for syngas production in the steam reformer SMR. In this case a very rich hydrogen syngas can be produced (50 vol% H₂). This has the consequence that the compression of blast furnace gas by compressor CMP would be avoided completely, whereas a larger steam reformer may be required. This is another option that could be advantageous in various cases.

Any future permanent unavailability of blast furnace gas could lead to some stranded costs. However, then there is still an option to fire synthesis gas in the gas turbine if it is decided to produce syngas from coal, oil, combustible waste material and/ or biomass. Also, in that case, the compressor CMP could still be used as a compressor for waste nitrogen from an air separation unit (ASU) that is needed anyhow in case of production of coal synthesis gas by partial oxidation with oxygen. It must also kept in mind that once the steel mill M would stop its steel production activities, there will be a sufficient local O₂ excess production capacity for coal gasification by partial oxidation with oxygen. Therefore, the system of figure 3 can easily and cost effectively be adapted, by installing a gasifier for the efficient production of the syngas, preferably by coal gasification, keeping stranded costs relatively low.

For instance, when steel mill operation would cease, the power station could use the available infrastructure of the former steel mill, in particular the coal handling and air separation assets to achieve substantial savings when adding a coal gasification unit to the power station in order to replace the steel mill gases by low calorific coal synthesis gas.

Following from the above, the system according to the present invention is very flexible in the use of fuel. From calculations below, it also follows that the system retains a high efficiency in various modes of operation, using various fuels in various ratios. The fuel flexibility of the power station, as schematically shown in fig. 3, can simply be extended to coal or even biomass and heavy oil refinery residues, by installing suitable gasifiers. This advantages of this fuel flexibility is even more pronounced when the steel mill company ceases operation.

High system efficiency can quite easily be achieved be admixing said hydrogen rich, medium caloric value synthesis gas (syngas) to the steel mill gases. The syngas is much more suited to improve the combustibility of steel mill gases than natural gas. According to the invention, such synthesis gas can easily be produced from natural gas as a feed stock using conventional steam reformer technology.

Besides, the steam reform process is endothermic. The total heating value of synthesis gas stream includes the vast amounts of heat picked up in the reform section of the steam reformer furnace SMR. This heat in converted to electricity with the same efficiency as the rest of the heating value of the fuel gases fed to the gas turbine combustion chamber.

The steam reformer SMR is usually designed to fire low calorific value gases (usually tail gases from a hydrogen plant). Therefore, the blast furnace gas can be used as a fuel in the steal reformer SMR without any problem. A large part of the heat liberated by firing the steel mill gases is used to raise the total heating value of the fuel gas processed in the steam reformer. This heat is converted to electricity, with the high thermal efficiency of a Combined Cycle Unit.

Usually, any steel mill gas that must be fired in a gas turbine must be compressed to a pressure well above the gas turbine working pressure, as in the system of fig. 1. Large and expensive compression systems are needed to accomplish this. In the present invention, at least part of the steel mill gases is preferably fired atmospherically in the steam reformer SMR; this part of the steel mill gases no longer needs to be compressed. The savings in compression energy and additional steam turbine power produced by expanding high pressure steam generated in the steam reformer lead to increased design power output for the power station based on a given gas turbine GT such that additional specific investment costs for the steam reformer system can largely be compensated for.

If for one reason or the other, steel mill operation would cease, the power station according to the invention can continue operation on natural gas only. If the burner would be replaced by a state of the art Dry Low Nox (DLN) burner, the power station operation would be competitive to conventional natural-gas-only fired power stations.

### Numerical Examples; Starting points and assumptions

Energy balance and load estimations have been carried out for the configuration of the system according to the invention of figure 3. The calculations have been carried out with the process simulation packages Gate Cycle and Enssim®. A theoretical gas turbine model has been used. The calculations are based on heat recovery steam generators HRSG with a triple pressure, reheat steam cycle, producing high pressure (HP) steam (120 bar/530°C) and low pressure (LP) steam (5 bar/200 °C).

In the calculations, a configuration as shown in fig. 3 has been used, based, however, on 2 gas turbines GT, 2 heat recovery steam generators HRSG and 2 steam turbines ST. The gas turbines are the dual fuel burner GE PG9351 FA generators of General Electric.

In certain calculations, the steam reformers SMR have been chosen to produce syngas with a hydrogen content of approx. 14 vol%. The reason for choosing about 14 % H₂ is to create some buffer to a minimum value of 10%. In this case the steam reformer can follow the load variations more smoothly.

An other design case has also been investigated, wherein all the available BFG is used for syngas production in the steam reformers SMR. In this case a very rich hydrogen syngas will be produced (50 vol% H₂). This has the consequence that the compression of BFG is no longer not required and that large steam reformers are required. This option results in higher NOₓ emissions due to the higher H₂ content. To reduce the NOₓ emissions to acceptable levels, large amounts of intermediate pressure (IP) steam are preferably injected in the gas turbine, affecting the overall efficiency. Compared to the steam reformers producing 14% syngas, the station net power is in this case found to be approximately 90 MWₑ higher and the net efficiency is approx. 1% point lower.

### Fuels

In table 1 typical data for a large scale natural gas (NG)/blast furnace gas (BFG) fired power station featuring steam reformer-technology are listed.

**Table 1 Fuel characteristic**

| | Natural gas | BFG | Syngas (steam reformer) |
|---|---|---|---|
| Pressure [bara] | 30 | 1,3 | 25 |
| Temperature [°C] | 15 | 35 | 235-250 |
| LHV wet [MJ/kg] | 44,7 | 2,4 | 6,6 |
| LHV wet [MJ/m₀³] | 35,7 | 3,2 | 7,45 |
| Thermal input [MWₜₕ] | 600-1325 | 200-625 | 0-460 |

Herein LHV stands for 'Lower Heating Value'. For the design of the power plant the following base load of BF-gas is chosen: thermal input BFG to steam reformer and gas turbine's: 400 MWth.

Said 400 MWₜₕ for BFG is typical for a large scale steel mills M expected average gas sales. Additional BFG supply can be burned in the duct burners of the heat recovery steam generators (HRSG's). For the present calculations, the HRSG's and steam turbine's are designed for a maximum of 50 MWₜₕ BFG.

### Gas turbines

A dual fuel burner (General Electric MNQC-burner) is applied in the gas turbine, using steam injection for NOₓ reduction. The syngas that is fed to the gas turbine's burner is based on BFG, the syngas, and natural gas. It will be mixed to the minimum required lower heating value of 7,45 MJ/Nm³ (200 BTU/scf). The hydrogen content of the syngas mixture is fixed at 14 vol%. This value creates a large buffer to the minimum value of 10% enabling the steam reformer to follow load variations very gently indeed. Undesirable, nervous steam reformer transient behaviour is avoided in this way.

The performance data of the GE PG9351 FA gas turbine are taken from latest information given by GE (October 2003) and the gas turbine World Handbook 2003.

For the gas turbine performance evaluations, ISO-conditions for ambient air have been used throughout. The following process parameters are used concerning the gas turbines:
Minimum lower heating value of input syngas mixture: 7,45 MJ/Nm3
Minimum H₂ content in syngas mixture: 10 vol %
Nominal thermal input gas turbine (25 °C): 675 MWₜₕ

### Heat recovery steam generators (HRSGs)

Hereinafter the main process parameters of the HRSG are compiled:

| | |
|---|---|
| HP steam pressure | 120 bar |
| HP steam Temperature | 530 °C |
| IP steam pressure | 40 bar |
| IP steam Temperature | 310 °C |
| Reheat steam pressure | 40 bar |
| Reheat steam temperature | 530 °C |
| LP steam pressure | 5 bar |
| LP steam temperature | 200 °C |
| Design duct firing BFG | 50 MWₜₕ |

### Steam installation - Cooling System

The condenser pressure in the steam installation cooling system is chosen to be 40 mbar.

### 1.1 First Design case, Base load BFG (400 MWₜₕ)/syngas (steam reformer) and NG to 2 gas turbines and 100 MWₜₕ BFG duct firing

In this first design case, a mixture of BFG/syngas and NG (461 MWₜₕ) and NG (214 MWₜₕ) is fired in the gas turbines. The total thermal input per gas turbine is 675 MWₜₕ. The BFG energy flow to one steam-reformer-module is approximately 57 MWₜₕ (28,5%). The gas turbines operate at maximum load and ambient conditions of 15 °C, 1,013 bara. 100 MWₜₕ BFG is fired in the duct burners of the HRSGs (50 MWₜₕ each HRSG). The resulting lower heating value (LHV) for the total gas mixture (secondary/primary fuel mix) to the gas turbine's is 9.0 MJ/kg, or 10.0 MJ/Nm³. For NOₓ reduction, 4,0 kg/s steam is injected in the gas turbines.

### 1.2 Off design 1, Base load BFG (400 MWₜₕ)/syngas (steam reformer) and NG to 2 gas turbines, no duct firing

This case is the same as the above design case 1.1, but there is no duct-firing in the HRSGs.

### 1.3 Off design 2, 100% NG to 2 gas turbine's

This case is characterized by the situation that no BFG is available. Then, the gas mixture to the gas turbines GT consist of 100 % natural gas. The 2 gas turbines operate at maximum load and ambient conditions of 15 °C. Total thermal input per gas turbine is 675 MWₜₕ. The resulting LHV for the gas mixture to the gas turbine's is 44.6 MJ/kg, or 35.6 MJ/Nm³. For NOₓ reduction, 24 kg/s steam is injected in the gas turbines.

### 1.4 Off design 3, Base load BFG (400 MWₜₕ)/syngas (steam reformer and NG to 2 gas turbine's in part load and 100 MWₜₕ BFG duct firing

This case is characterized by partial loading of the gas turbine (83% GT load) and duct firing in the HRSG's. A mixture of BFG/syngas and NG (461 MWₜₕ) and 116 MWth NG is fired in the gas turbine. The total thermal input per gas turbine is 577 MWₜₕ. The resulting LHV for the total gas mixture to the gas turbine's is 8.0 MJ/kg. For NOₓ reduction, 3.4 kg/s steam is injected in the gas turbines.

### 1.5 Off design 4, Base load BFG (400 MWₜₕ/syngas (steam reformer) and NG to 2 gas turbine's in part load. No duct firing

This case is the same as Off design 3, but there is no duct firing.

### 1.6 Off design 5, Base load BFG (400 MWₜₕ)/syngas (steam reformer) and NG to 2 gas turbines in part load no duct firing

This case is characterized by part load of the gas turbine (75% GT load) without duct firing in the HRSG's. A mixture of BFG/syngas and NG (461 MWₜₕ) and 67 MWₜₕ NG is fired in the gas turbine. This is the technical minimum load of the present gas turbines in co-firing mode, given the base load of BFG (400 MWₜₕ). In this case the ratio of fuel to secondary and primary burner is 87% to 13%. The total thermal input per gas turbine is 528 MWₜₕ. The resulting LHV for the total gas mixture to the gas turbine's is 7.4 MJ/kg. For NOₓ reduction, 3.1 kg/s steam is injected in the gas turbines.

### 1.7 Off design 6, BFG (300 MWₜₕ) /syngas (steam reformer) and NG to 2 gas turbines and 100 MWₜₕ BFG duct firing

This design is similar to the main design case 1.1, but takes a lower base load of BFG. To reduce the minimum load with two gas turbine's, given in off design case 5, the amount of BFG to steam reformers/gas-turbines can be reduced. In this case it is 300 MWₜₕ, while the gas turbines operate at maximum load. The BFG to one steam reformer SMR is approximately 43 MWₜₕ (28.5%). 100 MWₜₕ BFG is fired in the duct burners of the HRSG's (50 MWₜₕ each HRSG). The total thermal input per gas turbine is 675 MWₜₕ. The resulting LHV for the gas mixture to the gas turbines GT is 11.3 MJ/kg. For NOₓ reduction, 4.0 kg/s steam is injected in the gas turbines GT.

### 1.8 Off design 7, BFG (300 MWₜₕ) /syngas (steam reformer) and NG to 2 gas turbines in part load and 100 MWₜₕ BFG duct firing

This case is the same as Off design case 6, but the gas turbines GT are operating at technical minimum load (54%) in co-firing mode. In this case the ratio of fuel to secondary and primary burner is 84% - 16%. The total thermal input per gas turbine is 413 MWₜₕ. The resulting LHV for the total gas mixture to the gas turbines GT is 7.7 MJ/kg. For NOₓ reduction, 2.4 kg/s steam is injected in the gas turbines GT.

### 1.9 Off design 8, BFG (320 MWₜₕ)/syngas (team reformer) and NG to only 1 gas turbine at maximum load and 50 MWₜₕ BFG duct firing

This case is characterized by the maximum possible BFG fired in one gas turbine block, using only one gas turbine, one HRSG and one steam turbine. In this case a maximum 320 MWₜₕ to steam reformer/Gas Turbine and 50 MWₜₕ to HRSG is possible. This mounts to a total BFG supply of 370 MWₜₕ with one gas turbine in operation. In this case the gas turbine operates at maximum load with 100 % syngas. The resulting LHV for the total gas mixture to the gas turbines is 6.1 MJ/kg, or 7 MJ/Nm³. For NOₓ reduction no steam is required in the gas turbines.

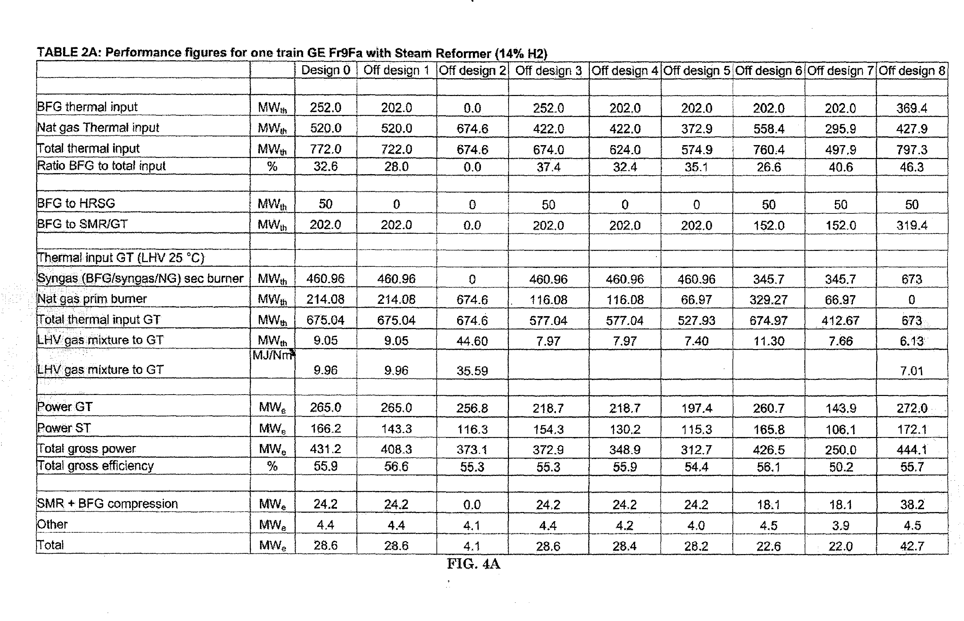

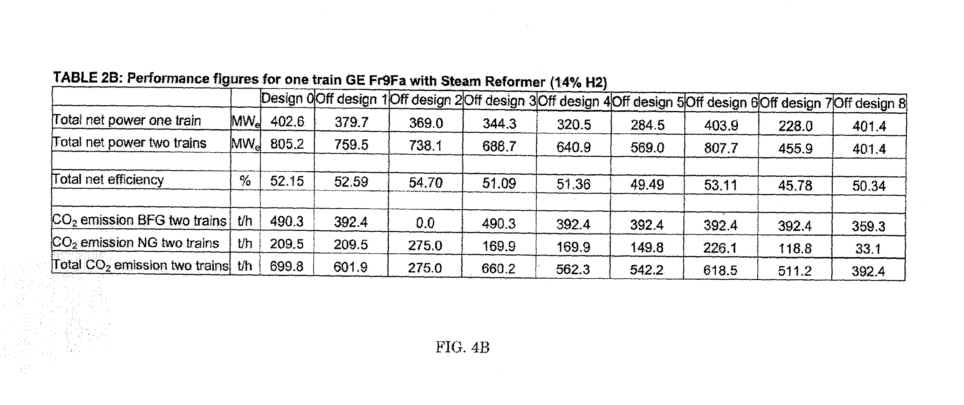

In table 2 (shown in figures 4A and 4B by tables 2A and 2B) the main results of the various designs 1.1-1.9 are given. Also the hourly CO₂ emissions are given.

From table 2 it follows, that maximum net power of the embodiment of the power station according to the invention is 805 MWₑ, based on the application of 2 gas turbine blocks (2 gas turbines/ 2 HRSG/ 2 steam turbines) fired-with BFG/syngas (produced by the steam reformer) and NG and using maximum duct firing (100 MWₜₕ, BF-gas).

Firing the base load of BFG (400 MWₜₕ) without duct firing results in a net power of 759 MWₑ

Station efficiency at maximum load is 52.6 % without duct firing and 52.1 % with duct firing

It is possible to keep the power plant in operation when the BFG supply stops, with a net electrical power of 738 MWₑ and an efficiency of 54.7% . The moderate efficiency is due to the requirement of IP-steam for NOx reduction. When changing the burners to state of the art DLN (=Dry Low Nox)type, the efficiency can increase to 56.5%

With 400 MWₜₕ of BFG to the stream reformers/Gas Turbines without duct firing in the HRSGs, a technical minimum load of 569 MWₑ (71 % of maximum) with an efficiency of 49.5% is possible. Reducing the BFG to steam reformer/gas turbine to 300 MWₜₕ and maximum duct firing to HRSG's (100 MWₜₕ), results in a minimum load of 456 MWe (57%) with an efficiency of 45.8%. This case can be applied in the operating mode when one steam turbine is out of operation. The capacity of one steam turbine ST may be too small. In that case, steam surplus can be led to condensers.

With one gas turbine block (1 GT/1 HRSG/1 ST) in operation, a total of 370 MWₜₕ BFG can be fired. 100 % syngas in one gas turbine results in a net electric power of 401 MWₑ and an efficiency of 50.3 %. The total amount of BFG to one gas turbine block can be increased to 400 MWₜₕ, by allowing a large amount of duct firing or allowing the minimum LHV of syngas mixture of approximately 6.5 MJ/Nm³.

While specific embodiments of the invention have been described above, it will be appreciated that the invention may be practiced otherwise than as described, within the scope of the accompanying claims. The description is not intended to limit the invention.

## Claims

1. Power generation system, at least arranged for recovering energy from blast furnace gas, the system comprising at least one gas turbine (GT), at least one heat recovery steam generator (HRSG), and at least one steam turbine (ST), wherein said gas turbine (ST) is connected directly or indirectly to said heat recovery steam generator (HRSG) for supplying hot flue gas thereto, wherein said heat recovery steam generator (HRSG) is connected directly or indirectly to said steam turbine (ST) for supplying high pressure steam thereto, wherein the system comprises at least one syngas producer (SMR) for producing syngas, wherein the syngas producer is coupled directly or indirectly at least to said gas turbine (GT) for supplying the turbine with at least part of said syngas, wherein a blast furnace gas supply (12) is provided for supplying blast furnace gas to said syngas producer and/or to syngas produced thereby.

2. System according to claim 1, wherein said syngas producer is a steam reformer (SMR).

3. System according to claim 2, wherein said syngas producer (SMR) is connected directly or indirectly to said heat recovery steam generator (HRSG) and/or said steam turbine (ST) by a water supply line for receiving water therefrom.

4. System according to at least claim 2, wherein said steam reformer (SMR) is connected directly or indirectly to said steam turbine (ST) for supplying high pressure steam thereto.

5. System according to any of the preceding claims, comprising a gas mixer (MX) down-stream relative to said syngas producer (SMR) and said blast furnace gas supply (12) for providing a gas mixture comprising at least said syngas and blast furnace gas, wherein said gas turbine (GT) is down-stream relative to said gas mixer (MX) for receiving said gas mixture therefrom.

6. System according to any of the preceding claims, wherein the blast furnace gas supply (12) is also connected directly or indirectly to said gas turbine (GT) and/or to said heat recovery steam generator (HRSG) for supplying blast furnace gas thereto.

7. System according to any of the preceding claims, further comprising at least one natural gas supply for supplying natural gas to said gas turbine (GT) and/or to said syngas producer (SMR).

8. System according to any of the preceding claims, wherein said gas turbine is a dual burner type gas turbine.

9. Method for producing power, for instance using a system according to any of the preceding claims, wherein at least one gas turbine (ST) produces hot flue gas which is being supplied to at least one heat recovery steam generator (HRSG), wherein said heat recovery steam generator (HRSG) produces high pressure steam which is being supplied to at least one steam turbine (ST), wherein syngas is being produced by at least one syngas producer, preferably being a steam reformer (SMR), wherein at least part of said syngas is being fed directly or indirectly to said gas turbine, wherein blast furnace gas is being supplied to said syngas producer (SMR) and/or to syngas produced by said syngas producer.

10. Method according to claim 9, wherein blast furnace gas is also being supplied to said heat recovery steam generator.

11. Method according to claim 9 or 10, wherein blast furnace gas is also being supplied to said gas turbine.

12. Method according to claim 11, wherein blast furnace gas is being compressed before being supplied to said gas turbine.

13. Method according to claim 12, wherein said compressed blast furnace gas is being mixed with said syngas, wherein the resulting gas mixture is fed to said gas turbine.

14. Method according to any of claims 9-13, wherein about 20-30 mass% of a blast furnace gas stream is being fed to said syngas producer (SMR), wherein about 50-70 mass% of the blast furnace gas is being fed to said gas turbine (GT), wherein a remaining percentage of said blast furnace gas stream is being fed to said heat recovery steam generator (HRSG).

15. Method according to claim 14, wherein about 25 mass% of the blast furnace gas stream is being fed to said syngas producer (SMR), wherein about 60 mass% of the blast furnace gas is being fed to said gas turbine (GT), wherein about 15 mass% of said blast furnace gas stream is being fed to said heat recovery steam generator (HRSG).

16. Method according to any of claims 9-15, wherein said heat recovery steam generator (HRSG) and/or said steam turbine (ST) generate water which is at least partially being fed to said syngas producer (SMR), to be used in producing said syngas.

17. Method according to any of claims 9-16, wherein said syngas producer is a steam reformer which produces steam, wherein the steam is at least partially being supplied to said steam turbine (ST), for driving or contributing in driving the steam turbine (ST).

18. Method according to any of claims 9-17, wherein at least one further fuel, for example natural gas, is being supplied to said gas turbine (GT) for driving said gas turbine (GT).

19. Method for improving the combustability of steel mill gases, comprising mixing syngas to blast furnace gas, wherein the syngas is preferably being produced by a steam reformer which is also being provided with blast furnace gas.

20. Use of a system according to at least claim 2, wherein during a first period of operation, blast furnace gas is being supplied to the steam reformer (SMR), to be combusted therein and/or to provide heat thereto, wherein during a second period of operation, the system is being run without the use of blast furnace gas, for instance by installing at least one coal,and/or biomass gasifier for producing said syngas.

21. Use of a system according at least claim 2, wherein said steam reformer produces a first syngas, wherein at least one coal, oil, combustible waste and/or biomass gasifier is used for providing a second syngas, which second syngas is used instead of, or at least partially replaces, said the syngas produced by said steam reformer.

22. Use of a system according to at least claim 2, wherein, after a certain period of operation, said steam reformer is replaced by at least one coal, oil, combustible waste and/or biomass gasifier.

23. The use of blast furnace gas as a fuel in a steam reformer for producing syngas.

24. System according to any of claims 1-8, wherein said syngas producer is a gasifier, particularly one of the following: a coal, biomass, oil and/or combustible waste gasifier.

## Amended claims

### Amended claims in accordance with Rule 86(2) EPC.

**1.** Power generation system, at least arranged for recovering energy from blast furnace gas, the system comprising at least one gas turbine (GT), at least one heat recovery steam generator (HRSG), and at least one steam turbine (ST), wherein said gas turbine (GT) is connected directly or indirectly to said heat recovery steam generator (HRSG) for supplying hot flue gas thereto, wherein said heat recovery steam generator (HRSG) is connected directly or indirectly to said steam turbine (ST) for supplying high pressure steam thereto, **characterised in that** the system comprises at least one syngas producer for producing syngas, wherein the syngas producer is coupled directly or indirectly at least to said gas turbine (GT) for supplying the turbine with at least part of said syngas, wherein a blast furnace gas supply (12) is provided for supplying blast furnace gas to said syngas producer and/or to syngas produced by said syngas producer.

**2.** System according to claim 1, wherein said syngas producer is a steam reformer (SMR).

**3.** System according to claim 2, wherein said syngas producer is connected directly or indirectly to said heat recovery steam generator (HRSG) and/or said steam turbine (ST) by a water supply line for receiving water therefrom.

**4.** System according to claim 2, wherein said steam reformer (SMR) is connected directly or indirectly to said steam turbine (ST) for supplying high pressure steam thereto.

**5.** System according to any of the preceding claims, comprising a gas mixer (MX) down-stream relative to said syngas producer and said blast furnace gas supply (12) for providing a gas mixture comprising at least said syngas and blast furnace gas, wherein said gas turbine (GT) is down-stream relative to said gas mixer (MX) for receiving said gas mixture therefrom.

**6.** System according to any of the preceding claims, wherein the blast furnace gas supply (12) is also connected directly or indirectly to said gas turbine (GT) and/or to said heat recovery steam generator (HRSG) for supplying blast furnace gas thereto.

**7.** System according to any of the preceding claims, further comprising at least one natural gas supply for supplying natural gas to said gas turbine (GT) and/or to said syngas producer.

**8.** System according to any of the preceding claims, wherein said gas turbine is a dual burner type gas turbine.

**9.** Method for producing power, for instance using a system according to any of the preceding claims, wherein at least one gas turbine (GT) produces hot flue gas which is being supplied to at least one heat recovery steam generator (HRSG), wherein said heat recovery steam generator (HRSG) produces high pressure steam which is being supplied to at least one steam turbine (ST), **characterised in that** syngas is being produced by at least one syngas producer, preferably being a steam reformer (SMR), wherein at least part of said syngas is being fed directly or indirectly to said gas turbine, wherein blast furnace gas is being supplied to said syngas producer and/or to syngas produced by said syngas producer.

**10.** Method according to claim 9, wherein blast furnace gas is also being supplied to said heat recovery steam generator.

**11.** Method according to claim 9 or 10, wherein blast furnace gas is also being supplied to said gas turbine.

**12.** Method according to claim 11, wherein blast furnace gas is being compressed before being supplied to said gas turbine.

**13.** Method according to claim 12, wherein said compressed blast furnace gas is being mixed with said syngas, wherein the resulting gas mixture is fed to said gas turbine.

**14.** Method according to any of claims 9-13, wherein about 20-30 mass% of a blast furnace gas stream is being fed to said syngas producer, wherein about 50-70 mass% of the blast furnace gas is being fed to said gas turbine (GT), wherein a remaining percentage of said blast furnace gas stream is being fed to said heat recovery steam generator (HRSG).

**15.** Method according to claim 14, wherein about 25 mass% of the blast furnace gas stream is being fed to said syngas producer, wherein about 60 mass% of the blast furnace gas is being fed to said gas turbine (GT), wherein about 15 mass% of said blast furnace gas stream is being fed to said heat recovery steam generator (HRSG).

**16.** Method according to any of claims 9-15, wherein said heat recovery steam generator (HRSG) and/or said steam turbine (ST) generate water which is at least partially being fed to said syngas producer, to be used in producing said syngas.

**17.** Method according to any of claims 9-16, wherein said syngas producer is a steam reformer which produces steam, wherein the steam is at least partially being supplied to said steam turbine (ST), for driving or contributing in driving the steam turbine (ST).

**18.** Method according to any of claims 9-17, wherein at least one further fuel, for example natural gas, is being supplied to said gas turbine (GT) for driving said gas turbine (GT).

**19.** Method for improving the combustability of steel mill gases, comprising mixing syngas to blast furnace gas, wherein the syngas is preferably being produced by a steam reformer which is also being provided with blast furnace gas.

**20.** Use of a system according to claim 2, wherein during a first period of operation, blast furnace gas is being supplied to the steam reformer (SMR), to be combusted therein and/or to provide heat thereto, wherein during a second period of operation, the system is being run without the use of blast furnace gas.

**21.** Use of a system according to claim 2, wherein said steam reformer produces a first syngas, wherein at least one coal, oil, combustible waste and/or biomass gasifier is used for providing a second syngas, which second syngas is used instead of, or at least partially replaces, said the syngas produced by said steam reformer.

**22.** Use of a system according to claim 2, wherein, after a certain period of operation, said steam reformer is replaced by at least one coal, oil, combustible waste and/or biomass gasifier.

**23.** The use of blast furnace gas as a fuel in a steam reformer for producing syngas.

**24.** System according to any of claims 1-8, wherein said syngas producer is a gasifier, particularly one of the following: a coal, biomass, oil and/or combustible waste gasifier.
